# NEUE EUROPÄISCHE PATENTSCHRIFT

(11) **EP 2 418 402 B2**
(45) Veröffentlichungstag und Bekanntmachung des Hinweises auf die Entscheidung über den Einspruch: **11.01.2017**
(45) Hinweis auf die Patenterteilung: 23.10.2013
(21) Anmeldenummer: 11172954.7
(22) Anmeldetag: 07.07.2011
(51) Int. Cl.: F16H 61/04, F16H 63/40

(54) **Verfahren zum Auswählen von Synchronelementen bei automatisierten Getrieben**
Method for selecting synchronised elements in automated transmissions
Procédé de sélection d'éléments synchrones dans des engrenages automatisés

(30) Priorität: 10.08.2010 DE 102010039138
(43) Veröffentlichungstag der Anmeldung: 15.02.2012
(73) Patentinhaber: ZF Friedrichshafen AG, 88046 Friedrichshafen (DE)
(72) Erfinder: Schneider, Florian, 88161 Lindenberg (DE); Mair, Roland, 88069 Tettnang (DE)

(56) Entgegenhaltungen:
- WO-A1-2007/031192
- DE-A1- 4 446 109
- DE-A1- 10 133 695
- DE-A1- 10 242 567
- DE-A1-102007 043 694
- DE-A1-102008 040 918
- DE-A1-102008 042 345
- US-A1- 20040 192 499

## Beschreibung

Die vorliegende Erfindung betrifft ein Verfahren zum Auswählen von zumindest einem Synchronelement bei einem automatisierten Getriebe eines Fahrzeuges gemäß der im Oberbegriff des Patentanspruches 1 näher definierten Art.

Beispielsweise in Nutzfahrzeugen werden häufig automatisierte Getriebe im Antriebsstrang eingesetzt, wobei die Getriebe in verschiedenen Ausbaustufen beziehungsweise Konfigurationen ausgeführt sind. Aufgrund der verschiedenen Getriebekonzepte entsteht eine Variabilität hinsichtlich der Anzahl der Teilgetriebe und deren Schaltelemente, die eine mechanische Synchronisierung aufweisen oder fremdsynchronisiert werden. Je nach Art von zur Verfügung stehenden Synchronelementen können diese zum Ausführen von Synchronaufgaben in beide Drehrichtungen oder in nur einer Drehrichtung eingesetzt werden. Als Synchronelemente können je nach Getriebekonzept z. B. eine Getriebebremse, eine elektrische Maschine und ein Verbrennungsmotor in Verbindung mit einer Anfahrkupplung eingesetzt werden.

Beispielsweise aus der Druckschrift DE 10 2007 007 257 A1 ist ein Verfahren bekannt, bei dem zur Erweiterung der Funktionsmöglichkeiten eine elektrische Maschine bei Schaltvorgängen im Schaltgetriebe als Synchronelement eingesetzt wird. Darüber hinaus offenbart die Druckschrift DE 10 2007 043 694 A1 ein Verfahren zur Schaltsteuerung eines automatisierten Gruppengetriebes.

Bei den bekannten Verfahren ist die Auswahl von Synchronelementen und Schaltabläufen in nachteiliger Weise statisch hinterlegt und wird über Parametrisierung an die jeweilige Konfigurationen des Fahrzeuges bei der Herstellung angepasst. Daraus ergibt ein hoher Konfigurationsaufwand und zudem sind nachträglich keine Änderungen möglich, sodass auf variable Einflussgrößen und auf dynamische Einflüsse im Betrieb des Fahrzeuges nicht reagiert werden kann, da die Auswahl der Synchronelemente bereits festgelegt ist.

Aus der Schrift DE 102 42 567 A1 ist ein Verfahren bekannt, mit dem Gang-Schaltvorgänge eines automatischen oder automatisierten Schaltgetriebes hinsichtlich einer besseren Akzeptanz durch den Fahrzeugführer optimiert werden. Dazu ist vorgesehen, dass der Getriebeschaltvorgang derart gesteuert und geregelt wird, dass die Charakteristik der Gangschaltung in Abhängigkeit von schalt- oder betriebssituationsabhängigen Größen eines Kraftfahrzeugs und der Fahrzeugumgebung zwischen einer schnellstmöglichen Schaltung und einer komfortablen Schaltung liegt.

Aus der DE 10 2008 040 918 A1, die den nächstliegenden Stand der Technik offenbart, wird eine Getriebevorrichtung für einen Fahrzeugantriebsstrang und ein Verfahren zum Betreiben einer Getriebevorrichtung offenbart, bei welchem eine Gewichtung von Zielkriterien bei Vorliegen einer Hochschaltanforderung erfolgt.

Der vorliegenden Erfindung liegt die Aufgabe zu Grunde, ein Verfahren zum Auswählen von zumindest einem Synchronelement bei einem automatisierten Getriebe der eingangs genannten Gattung vorzuschlagen, bei dem im Betrieb des Fahrzeuges vorbestimmte Randbedingungen und dynamische Einflüsse berücksichtigt werden.

Diese Aufgabe wird erfindungsgemäß durch die Merkmale des Patentanspruches 1 gelöst, wobei sich weitere vorteilhafte Ausgestaltungen aus den Unteransprüchen und den Zeichnungen ergeben.

Demzufolge wird ein Verfahren zum Auswählen von zumindest einem Synchronelement bei einem automatisierten Getriebe eines Fahrzeuges zum Unterstützen eines Schaltvorganges vorgeschlagen, wobei die in dem Getriebe vorhandenen Synchronelemente beziehungsweise Synchronisierungen während des Betriebes zur Priorisierung für den Einsatz beim Schaltvorgang vorzugsweise kontinuierlich bewertet werden.

Dadurch, dass die Auswahl und die Priorisierung eines oder mehrerer Synchronelemente mit dem erfindungsgemäßen Verfahren während des Fahrzeugbetriebes erfolgt, können die aktuell zur Verfügung stehenden Synchronelemente beispielsweise bezüglich ihrer Einsetzbarkeit und ihrem aktuellen Belastungszustand für den Einsatz zur Unterstützung eines Schaltvorganges bewertet werden. Somit können neben einem Fahrerwunsch auch aktuelle Randbedingungen, wie zum Beispiel eine Steigung, ein Gefälle, die Einsatzart des Fahrzeuges und auch vorbestimmte Anforderungen bezüglich der Geschwindigkeit und des Komforts bei der erfindungsgemäßen Auswahl berücksichtigt werden. Des Weiteren können auch Randbedingungen bezüglich einer angestrebten Lebensdauer der Synchronelemente bei der Auswahl der Synchronelemente bedacht werden. Auch variable Einflüsse, zum Beispiel durch eine Last an einem getriebeseitigen Nebenabtrieb sowie dynamische Einflüsse, zum Beispiel durch den Ausfall oder den Belastungsgrad eines Synchronelements werden bei dem vorgeschlagenen Verfahren berücksichtigt.

Gemäß der Erfindung wird bei dem vorgeschlagenen Auswahlverfahren eine Bewertung und Priorisierung kontinuierlich wiederholend durchgeführt, so dass auch während einer aktiven Aufgabe, die von einem ausgewählten Synchronelement ausgeführt wird, geprüft wird, ob ein anderes Synchronelement geeigneter ist, die Restaufgabe durchzuführen. Damit wird auch der Fall abgedeckt, dass während einer Aufgabe das aktivierte Synchronelement ausfällt oder überlastet ist, so dass dann automatisch ein anderes Synchronelement ausgewählt werden kann. Ferner kann zudem der Fall abgedeckt werden, dass ein ausgewähltes Synchronelement beispielsweise die Synchronaufgabe nur in eine Drehrichtung ausführen kann, da zum Beispiel die Getriebebremse als Synchronelement Wellen nur abbremsen kann. Wenn jedoch der Drehzahlangleich in die andere Drehrichtung erfolgen muss, da zum Beispiel die Welle vorher zu stark abgebremst worden ist und jetzt wieder beschleunigt werden muss, kann mit dem erfindungsgemäßen Verfahren ein dafür geeignetes Synchronelement ausgewählt werden, welches dann die durchzuführende Aufgabe übernimmt. Auf diese Weise wird das Verfahren nicht nur vor Beginn einer durchzuführenden Aufgabe ausgeführt, sondern laufend, so dass auch während der Aufgabe jederzeit das Synchronelement gewechselt werden kann, wenn für die verbleibende Aufgabe ein geeigneteres Synchronelement zur Verfügung steht.

Die vorgeschlagenen Erfindung wird dadurch realisiert, dass bei einem ausgewählten Synchronelement während der Erfüllung einer Aufgabe die Gewichtung zumindest eines Zielkriteriums verändert wird. Somit wird die vorgeschlagene Auswahlstrategie dahingehend modifiziert, dass abhängig von dem Umfang der durchzuführenden Aufgabe und der Annäherung an das Ziel die Gewichtung der Zielkriterien verändert wird, indem beispielsweise in der Nähe des Zieles der Komfort stärker gewichtet wird als zu Beginn. Anhand einer Drehzahlsynchronisierung als Aufgabe des ausgewählten Synchronelements kann somit in Abhängigkeit von der Erledigung der Synchronaufgabe, also in Abhängigkeit der verbleibenden Rest-Drehzahldifferenz, die Gewichtung der Zielkriterien verändert werden, so dass bei großen Drehzahldifferenzen tendenziell leistungsfähigere Synchronelemente und bei Annäherung an das Ziel zum Beispiel hinsichtlich des Komforts und der Zielgenauigkeit qualitativ bessere Synchronelemente eingesetzt werden. Es sind aber noch andere Gewichtungen möglich.

Im Rahmen einer vorteilhaften Ausführungsvariante der Erfindung kann vorgesehen sein, dass bei der Priorisierung eines einzusetzenden Synchronelements die während des Schaltvorganges durchzuführende Aufgabe berücksichtigt wird. Als Aufgabe kann zum Beispiel die Synchronisierung im Umfeld des Getriebes beziehungsweise der Getriebesteuerung durch das Einstellen von Gleichlauf beziehungsweise einer definierten Differenzdrehzahl zweier drehender Bauteile bzw. Wellen vorgesehen werden. Je nach Getriebeart sind diese verbind- und trennbar zum Beispiel über eine Reibkupplung oder eine Schaltklaue oder dergleichen. Bei der Synchronisierung sind die zu synchronisierenden trägen Massen und Schleppmomente von der Art des Getriebes abhängig, welches ebenfalls bei der erfindungsgemäßen Auswahl berücksichtigt wird. Das erfindungsgemäße Auswahlverfahren kann auch Synchronelemente beziehungsweise Aktoren beispielsweise zur Auflösung so genannter Zahn-vor-Zahnstellungen bei einem Schaltelement bewerten. Die erfindungsgemäße Auswahl und Bewertung von Synchronelementen kann auch im Rahmen von anderen Aufgaben zum Unterstützen von Schaltvorgängen eingesetzt werden.

Neben der Berücksichtigung der Aufgabe kann im Rahmen einer nächsten Ausgestaltung der Erfindung vorgesehen sein, dass auch die Art des vorhandenen Getriebes und die Art des einzusetzenden Synchronelementes bei der Priorisierung berücksichtigt werden. Durch die Art des Getriebes werden die verfügbaren Synchronelemente festgelegt. Wenn im Getriebe die bevorstehende Aufgabe beispielsweise zur Synchronisierung oder zur Auflösung einer Zahn-vor-Zahnstellung festgelegt ist, kann das vorgeschlagene Verfahren für jedes Synchronelement bevorzugt bestimmen, wie schnell und mit welchen Komfort die Aufgabe mit dem jeweiligen Synchronelements bewerkstelligt werden kann. Bei dieser Bewertung des Synchronelements kann die zusätzliche Belastung durch die durchzuführende Aufgabe und die verbleibende Lebensdauerreserve ermittelt werden. Diese Daten können bei der Priorisierung berücksichtigt werden.

Darüber hinaus kann für jedes Synchronelement zunächst bestimmt werden, ob eine Erledigung der durchzuführenden Aufgabe überhaupt möglich ist. Beispielsweise kann aufgrund der Art des Synchronelements zum Beispiel ein notwendiges Moment nicht aufgebracht werden oder die dabei auftretenden Belastungen sind unerwünscht hoch. Ferner ist es möglich, dass das Synchronelement beispielsweise einem geforderten Drehzahlangleich im Rahmen einer Synchronaufgabe in eine geforderte Richtung nicht leisten kann, da es sich bei dem Synchronelement zum Beispiel um eine Bremse handelt, die nur verzögern aber nicht beschleunigen kann. Diese Randbedingungen können ebenfalls bei der Priorisierung berücksichtigt werden. Ferner wird auch die jeweilige Position des Synchronelements im Getriebe beziehungsweise im Antriebsstrang berücksichtigt, da es beispielsweise möglich ist, dass ein Synchronelement nicht geeignet ist in einem Bereichsgetriebe eine Aufgabe zu erledigen, da es beispielsweise im Hauptgetriebe angeordnet ist oder umgekehrt. Somit sind die vorgenannten Kriterien möglicher Ausschlusskriterien bei der Priorisierung. Des Weiteren ist bei der Bewertung eines Synchronelements zu berücksichtigen, ob es prinzipiell für die durchzuführende Aufgabe zur Verfügung steht oder, ob es zum Beispiel wegen eines Fehlers nicht einsetzbar ist.

Nach den vorgenannten Verfahrensschritten kann im Rahmen der Priorisierung der zur Verfügung stehenden Synchronelemente zum Durchführen einer vorgegebenen Aufgabe eine Liste mit Synchronelementen erstellt werden, die für die Aufgabe eingesetzt werden können, wobei z. B. zusätzlich eine Information über die Erfüllung vorbestimmter Zielkriterien jedem gelisteten Synchronelement zugeordnet ist. Beispielsweise in Abhängigkeit der aktuellen Fahrsituationen und/oder in Abhängigkeit von aktuellen Randbedingungen, wie zum Beispiel dem Fahrerwunsch, der Topologie der Fahrtsrecke, der Fahrzeugmasse oder dergleichen kann eine Gewichtung für die einzelnen Zielkriterien im Auswahlverfahren vorgegeben werden. Für die aufgelisteten Synchronelemente kann somit mithilfe der Gewichtung jeweils ein Erfüllungsgrad bezogen zumindest auf ein vorgegebenes Zielkriterium ermittelt werden und dem jeweiligen Synchronelement zugeordnet werden.

Anhand der vorgenommenen Priorisierung kann dann ausgewählt werden, welches Synchronelement für die Erledigung der durchzuführenden Aufgabe optimaler Weise eingesetzt wird. Vorzugsweise kann zum Durchführen der vorgegebenen Aufgabe aus den aufgelisteten Synchronelementen dasjenige Synchronelement mit dem höchsten Erfüllungsgrad ausgewählt werden bzw. bei mehreren Zielkriterien bzw. Erfüllungsgraden dasjenige Synchronelement, bei dem die Summe der gewichteten Erfüllungsgrade am höchsten ist.

Im Rahmen einer nächsten Weiterbildung der Erfindung kann auch vorgesehen sein, dass nicht nur ein Synchronelement eingesetzt wird, sondern dass auch zwei oder mehrere gleichzeitig eingesetzt werden. Der Einsatz der Synchronelemente kann dabei zum Beispiel sequentiell und/oder parallel erfolgen, je nach dem welche Einsatzweise für die zu erledigende Aufgabe durch das vorgeschlagene Verfahren als optimal bewertet worden ist.

Bei der Verwendung von mehreren Synchronelementen können diese, wie vorher bereits beschrieben, zum Beispiel parallel eingesetzt werden, um in der Summe die Leistungsfähigkeit, zum Beispiel die Zeit zur Erledigung der Aufgabe, zu erhöhen und die Belastung der einzelnen Synchronelemente zu reduzieren, um dadurch die Lebensdauerreserve bei den einzelnen Synchronelementen zu verbessern.

Für den gleichzeitigen Einsatz mehrerer Synchronelemente wird bei dem erfindungsgemäßen Verfahren berücksichtigt, dass die jeweiligen Regeleinrichtungen der Synchronelemente nicht gegeneinander arbeiten. Dies kann zum Beispiel dadurch realisiert werden, dass die einzelnen Sollgrößen manipuliert werden oder unterschiedliche Sollgrößen vorgegeben werden. Es ist auch möglich, dass beispielsweise Synchronelemente im Sinne einer Steuerung eingesetzt werden und gegebenenfalls nahe des Zielpunktes abgeschaltet werden und somit die verbleibende Aufgabe nur von einem oder mehreren sehr gut regelbaren Synchronelementen erfüllt werden. Somit können zur Erhöhung der Leistungsfähigkeit bei dem erfindungsgemäßen Auswahlverfahren die Sollwerte für die einzelnen Synchronelemente getrennt vorgegeben werden, so dass eine gegenseitige negative Beeinflussung vermieden wird.

Das erfindungsgemäß vorgeschlagene Verfahren kann auch zur Auswahl der Aktoren beziehungsweise Synchronelemente zur Auflösung so genannter Zahn-vor-Zahnstellungen verwendet werden. Dazu kann das vorgeschlagene Verfahren ohne Änderungen eingesetzt werden, da die Zahn-vor-Zahnstellung durch Einstellen einer Drehzahldifferenz aufgehoben werden kann, so dass es aus Sicht des Verfahrens zwischen einer Synchronaufgabe und der Auflösung einer Zahn-vor-Zahnstellung keinen Unterschied bei der Bewertung gibt. Jedoch ist es möglich, dass im Rahmen des Auswahlverfahrens andere Gewichtungen Anwendung finden, da der Komfort bei der Auflösung einer Zahn-vor-Zahnstellung eine größere Beachtung findet, da Störungen im Antriebsstrang direkt spürbar sind. Wird zur Auflösung einer Zahn-vor-Zahnstellung das Einbringen eines Momentes durch Synchronelemente vorgesehen, können im Rahmen einer nächsten Weiterbildung der Erfindung bei dem Auswahlverfahren vorgesehen sein, dass geprüft wird, ob ein Synchronelement beziehungsweise ein Aktor in der Lage ist, gezielt ein Moment in der geforderten Größenanordnung einzustellen.

Die vorliegende Erfindung wird anhand der Zeichnungen weiter erläutert. Es zeigen:
Figur 1 eine schematische Ansicht eines Antriebsstranges mit einem Verbrennungsmotor und einem automatisierten Getriebe mit vorgeschaltetem und nachgeschaltetem Bereichsgetriebe sowie mit einem Nebenabtrieb;
Figur 2 eine schematische Ansicht eines Hybridantriebsstranges mit automatisierten Getriebe und Nebenabtrieb

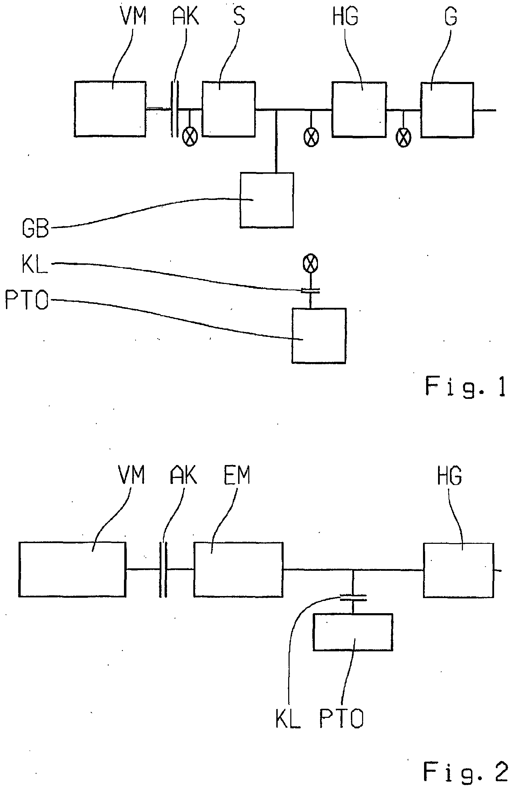

Die beiden in den Figuren 1 und 2 dargestellten Antriebsträngen sollen exemplarisch eine mögliche Anwendung des erfindungsgemäßen Auswahlverfahrens mit den jeweils zur Verfügung stehenden Synchronelementen zur Unterstützung eines Schaltvorganges darstellen.

Bei dem in Figur 1 angedeuteten Antriebsstrang können beispielsweise Synchronaufgaben an der Anfahrkupplung AK, dem so genannten Splitter S beziehungsweise vorgeschalteten Bereichsgetriebe, dem Hauptgetriebe HG oder dem Gruppengetriebe G beziehungsweise nachgeschalteten Bereichsgetriebe sowie an der formschlüssigen Kupplung KL des Nebenabtriebes PTO auftreten.

Als Synchronelemente beziehungsweise Aktoren stehen zum Beispiel die getriebeinternen Synchronisierungen in dem Splitter S, dem Hauptgetriebe HG und dem Gruppengetriebe G zur Verfügung. Ferner können Synchronelemente durch den Verbrennungsmotor VM beziehungsweise die Anfahrkupplung AK und die Getriebebremse GB oder auch aus einer Kombinationen von diesen Elementen zur Verfügung gestellt werden.

Wie in Figur 1 angedeutet, kann die Anordnung des Nebenabtriebes PTO entsprechend variiert werden, welches durch Kreuze in der Figur angedeutet ist.

Der Hybridantriebsstrang gemäß Figur 2 bietet im Gegensatz zu dem in Figur 1 dargestellten Antriebsstrang zusätzlich eine elektrische Maschine EM, die ebenfalls als Synchronelement eingesetzt werden kann. Da bei dieser Ausführung kein vorgeschaltetes und nachgeschaltetes Bereichsgetriebe vorgesehen ist, entfallen diese bei dieser konkreten Ausführung als Synchronelemente.

### Bezugszeichen

- VM: Verbrennungsmotor
- AK: Anfahrkupplung
- S: Splitter beziehungsweise vorgeschaltetes Bereichsgetriebe
- GB: Getriebebremse
- HG: Hauptgetriebe
- G: Gruppe beziehungsweise nachgeschaltetes Bereichsgetriebe
- EM: elektrische Maschine
- PTO: Nebenabtrieb
- KL: formschlüssige Kupplung beziehungsweise Klaue

## Patentansprüche

1. Verfahren zum Auswählen von zumindest einem Synchronelement bei einem automatisierten Getriebe eines Fahrzeuges zum Unterstützen eines Schaltvorganges, wobei die in dem Getriebe vorhandenen Synchronelemente zur Priorisierung für den Einsatz beim Schaltvorgang bewertet werden und die Bewertung der Synchronelemente wiederholt wird, **dadurch gekennzeichnet, dass** bei einem ausgewählten Synchronelement während der Erfüllung einer Aufgabe die Gewichtung zumindest eines Zielkriteriums verändert wird.

2. Verfahren nach Anspruch 1, **dadurch gekennzeichnet, dass** bei der Priorisierung eines einzusetzenden Synchronelementes die während des Schaltvorganges durchzuführende Aufgabe berücksichtigt wird.

3. Verfahren nach einem der vorangehenden Ansprüche, **dadurch gekennzeichnet, dass** bei der Priorisierung die Art des vorhandenen Getriebes und/oder die Art des einzusetzenden Synchronelementes berücksichtigt wird.

4. Verfahren nach einem der vorangehenden Ansprüche, **dadurch gekennzeichnet, dass** bei der Priorisierung die aktuelle Verfügbarkeit des Synchronelementes berücksichtigt wird.

5. Verfahren nach einem der Ansprüche 2 bis 4, **dadurch gekennzeichnet, dass** bei der Priorisierung die für eine durchzuführende Aufgabe verwendbaren Synchronelemente aufgelistet werden.

6. Verfahren nach Anspruch 5, **dadurch gekennzeichnet, dass** bei der Priorisierung für jedes aufgelistete Synchronelement ein Erfüllungsgrad zumindest eines vorgegebenen Zielkriteriums ermittelt wird.

7. Verfahren nach einem der vorangehenden Ansprüche, **dadurch gekennzeichnet, dass** für eine durchzuführende Aufgabe mehrere Synchronelemente sequentiell und/oder parallel ausgewählt und eingesetzt werden.

8. Verfahren nach Anspruch 7, **dadurch gekennzeichnet, dass** bei parallel einsetzten Synchronelementen Sollwerte zum Erfüllen von vorbestimmten Zielkriterien unabhängig von einander vorgegeben werden.

9. Verfahren nach einem der vorangehenden Ansprüche, **dadurch gekennzeichnet, dass** es für eine Drehzahlsynchronisierung oder ein Auflösen einer Zahn-vor-Zahnstellung bei einem Schaltelement als Aufgabe der Synchronelemente verwendet wird.

## Claims

1. Method for selecting at least one synchronizing element in an automated transmission of a vehicle for assisting a gear shifting process, wherein the synchronizing elements which are present in the transmission are evaluated for prioritization for use during the gear shifting process and the evaluation of the synchronizing elements is repeated, **characterized in that** in the case of a selected synchronizing element the weighting of at least one target criterion is changed during the satisfaction of a function.

2. Method according to Claim 1, **characterized in that** during the prioritization of a synchronizing element which is to be used the function which is to be carried out during the gear shifting process is taken into account.

3. Method according to one of the preceding claims, **characterized in that** during the prioritization the type of transmission present and/or the type of synchronizing element to be used is taken into account.

4. Method according to one of the preceding claims, **characterized in that** during the prioritization the current availability of the synchronizing element is taken into account.

5. Method according to one of Claims 2 to 4, **characterized in that** during the prioritization the synchronizing elements which can be used for a function which is to be carried out are listed.

6. Method according to Claim 5, **characterized in that** during the prioritization a degree of satisfaction of at least one predefined target criterion is determined for each listed synchronizing element.

7. Method according to one of the preceding claims, **characterized in that** a plurality of synchronizing elements are selected and used sequentially and/or in parallel for a function which is to be carried out.

8. Method according to Claim 7, **characterized in that** in the case of synchronizing elements which are used in parallel, setpoint values are predefined for satisfying predetermined target criteria independently of one another.

9. Method according to one of the preceding claims, **characterized in that** said method is used for rotational speed synchronization or for triggering a tooth-before-tooth position in a gear shifting element as a function of the synchronizing elements.

## Revendications

1. Procédé de sélection d'au moins un élément synchrone dans une boîte de vitesses automatisée d'un véhicule pour assister une opération de changement de vitesses, les éléments synchrones prévus dans la boîte de vitesses étant analysés en termes de leur priorité pour l'utilisation lors de l'opération de changement de vitesses et l'analyse des éléments synchrones étant répétée, **caractérisé en ce que** dans le cas d'un élément synchrone sélectionné, pendant la mise en oeuvre d'une tâche, la pondération d'au moins un critère souhaité est modifiée.

2. Procédé selon la revendication 1, **caractérisé en ce que** lors de l'établissement de la priorité d'un élément synchrone à utiliser, la tâche à effectuer pendant l'opération de changement de vitesses est prise en compte.

3. Procédé selon l'une quelconque des revendications précédentes, **caractérisé en ce que** lors de l'établissement de la priorité, le type de boîte de vitesses existante et/ou le type d'élément synchrone à utiliser sont pris en compte.

4. Procédé selon l'une quelconque des revendications précédentes, **caractérisé en ce que** lors de l'établissement de la priorité, la disponibilité actuelle de l'élément synchrone est prise en compte.

5. Procédé selon l'une quelconque des revendications 2 à 4, **caractérisé en ce que** lors de l'établissement de la priorité, les éléments synchrones pouvant être utilisés pour une tâche à effectuer sont listés.

6. Procédé selon la revendication 5, **caractérisé en ce que** lors de l'établissement de la priorité pour chaque élément synchrone listé, un degré de satisfaction d'au moins un critère souhaité prédéfini est déterminé.

7. Procédé selon l'une quelconque des revendications précédentes, **caractérisé en ce que** pour une tâche à effectuer, plusieurs éléments synchrones sont sélectionnés et utilisés séquentiellement et/ou parallèlement.

8. Procédé selon la revendication 7, **caractérisé en ce que** lors de l'utilisation d'éléments synchrones en parallèle, des valeurs de consigne pour la satisfaction de critères souhaités prédéterminés sont prédéfinies indépendamment les unes des autres.

9. Procédé selon l'une quelconque des revendications précédentes, **caractérisé en ce qu'**il est utilisé pour une synchronisation de la vitesse de rotation ou pour la résolution d'une position dent contre dent dans le cas d'un élément de changement de vitesses, en tant que tâche des éléments synchrones.
